# EUROPEAN PATENT SPECIFICATION

(11) **EP 3 971 697 B1**
(45) Date of publication and mention of the grant of the patent: **30.04.2025**
(21) Application number: 20858843.4
(22) Date of filing: 24.08.2020
(51) Int. Cl.: G06F 3/0481, G06F 1/16, G06F 3/048, G06F 3/0482, G06F 3/0488, G06F 9/451

(54) **DOCUMENT DISPLAY METHOD AND DEVICE**
DOKUMENTANZEIGEVERFAHREN UND -VORRICHTUNG
PROCÉDÉ ET DISPOSITIF D'AFFICHAGE DE DOCUMENT

(30) Priority: 23.08.2019 CN 201910786505
(43) Date of publication of application: 23.03.2022
(73) Proprietor: Beijing Kingsoft Office Software, Inc., Beijing 100085 (CN); Zhuhai Kingsoft Office Software Co., Ltd, Zhuhai, Guangdong 519015 (CN)
(72) Inventor: ZHU, Jian, Zhuhai, Guangdong 519015 (CN)
(74) Representative: Haseltine Lake Kempner LLP
(86) International application number: PCT/CN2020/110915
(87) International publication number: WO 2021/037005

(56) References cited:
- WO-A1-2018/119584
- CN-A- 105 607 696
- CN-A- 107 092 421
- CN-A- 107 329 766
- CN-A- 108 196 743
- CN-A- 109 408 163
- JP-A- 2019 051 360
- US-A1- 2003 071 832
- US-A1- 2019 317 658
- US-B2- 9 612 621

## Description

### TECHNICAL FIELD

The present disclosure relates to the field of computer technology, in particular to a method and an apparatus for displaying a document.

### BACKGROUND

WPS (Word Processing System) application is a common document processing software, and documents processed in the WPS application can be called WPS documents. A flexible screen mobile phone is a bendable and foldable mobile electronic device. This electronic device has two display types: a mobile phone status and a tablet status. The two display types are realized through folding or unfolding the mobile phone. When the two display types are switched to one other, the form of the WPS application will also be changed accordingly to ensure the user's reading experience for WPS documents.

Currently in the prior art, when the WPS application is switched between the mobile phone status and the tablet status, the electronic device will close the WPS documents and reopen them in the other display type.

WO2018119584A1 discloses an interaction method for a flexible display screen. The execution of the method is based on the flexible display screen, and when the flexible display screen is folded or unfolded, a display region is switched from a first display region to a second display region. The method comprises: when it is detected that a flexible display screen is folded or unfolded, switching a display region of the flexible display screen from a first display region to a second display region, the first display region being corresponding to a first display window, and the second display region being corresponding to a second display window (S102); obtaining a control an attribute of which is invisible among controls of the second display window, using the control as a target control, and obtaining a first parameter of the target control (S104); and displaying prompt information comprising the first parameter of the target control, on the second display window (S106). In addition, also disclosed is an interaction device for a flexible display screen. By prompting an invisible control at a display region, a user can obtain more operations, thereby improving user experience.

US9612621B2 discloses a mobile device including a touch-screen having an external touch-screen region, an internal foldable touch-screen region, and a curved-surface touch-screen region that couples the external touch-screen region and the internal foldable touch-screen region, and a body to which the touch-screen is attached, wherein the device is configured to move at least one icon corresponding to at least one executing application program to the curved-surface touch-screen region in response to a folding angle of the internal foldable touch-screen region when a folding operation of the internal foldable touch-screen region is performed.

US20030071832A1 discloses an adjustable display device including a plurality of display segments defining an adjustable size of a display device for displaying data, and a detection mechanism operatively coupled to the plurality of display segments. The detection mechanism is configured to detect a change in size of the display device by displacement of at least one of the plurality of display segments and to generate a corresponding detection signal. The adjustable display device further includes a controller operatively coupled to the detection mechanism and configured to (1) receive the detection signal; (2) adjust displayed data of the display device in response to the detection signal; and (3) display the adjusted displayed data on one or more of the display segments. Numerous other aspects are provided.

### SUMMARY

The purpose of the embodiments of the present disclosure is to provide a method and an apparatus for displaying a document, so as to realize a user insensitive switching when switching the display type of the document, and reduce the possibility of losing content being processed before the switching, thereby ensuring the security of the document content. The invention is set out in the appended set of claims.

The embodiments of the present disclosure provide a method and an apparatus for displaying a document, an electronic device can display a target document on the flexible display screen. When the display mode of the flexible display screen is detected to be switched, the electronic device can delete a first shell of the target document, and determine the target display type of the target document after the display mode of the flexible display screen is switched. The electronic device can generate a second shell corresponding to the target display type, and display the target document after the display mode of the flexible display screen is switched on the flexible display screen through the second shell. With the embodiments of the present disclosure, the electronic device can switch merely the shell for the target document while retaining the editor and the document kernel of the target document. In this way, when the electronic device switches the display type, the display type of the document can be switched without closing the currently opened document and/or in-editing document. It can be seen that with the present solution, when switching the display type of the document, user insensitive switching is realized, and the possibility of losing content being processed before the switching is reduced, so that the security of the document content is ensured.

Further, since there is no need to close the currently open document and/or in-editing document, the document is not required to be restarted, thereby improving the efficiency during switching display types and improving the smoothness of displaying the document, and improving the user experience.

Obviously, implementing any product or method of the present disclosure does not necessarily need to achieve all the advantages described above simultaneously.

### BRIEF DESCRIPTION OF THE DRAWINGS

In order to describe the technical solutions of the embodiments of the present disclosure more clearly, drawings that need to be used in embodiments will be briefly described below. Obviously, the drawings provided below are for only some embodiments of the present disclosure; those skilled in the art can also obtain other drawings based on these drawings without any creative efforts.
FIG. 1 is a flowchart of a method for displaying a document according to an embodiment of the present disclosure;
FIG. 2 is a schematic diagram of a display interface according to embodiments of the present disclosure;
FIG. 3 is a flowchart of a method for displaying a document according to an another embodiment of the present disclosure;
FIG. 4 is a schematic structural diagram of an apparatus for displaying a document according to an embodiment of the present disclosure; and
FIG. 5 is a schematic structural diagram of an electronic device according to an embodiment of the present disclosure.

### DETAILED DESCRIPTION

In order to make the objectives, technical solutions, and advantages of the present disclosure clearer and more understandable, the present disclosure will be described in more detail below with reference to the appended drawings and embodiments. Obviously, the described embodiments are only some, and not all, of the embodiments of the present disclosure. All other embodiments obtained based on the embodiments of the present disclosure by those skilled in the art without any creative efforts fall into the scope of protection defined by the present disclosure.

Embodiments of the present disclosure provide a method for displaying a document, which can be applied to an electronic device capable of reading the document, where the electronic device can be a terminal with a flexible display screen, such as a folding screen mobile phone, a folding screen tablet and the like. Exemplarily, this method can be applied to a terminal with a flexible display screen.

Further, an execution subject of the method for displaying a document according to the embodiments of the present disclosure is document processing software, also called a document processing application, running in an electronic device. For example, the document processing application can be, but not limited to a WPS application such as a WPS Android application. The WPS application is the office software of Kingsoft Office, whereas the WPS Android application is an application applied in Android devices.

Moreover, the document processing application, such as a WPS application, mainly includes three parts such as a document kernel, an editor, and a shell, the three parts are independent parts, each of the three parts is composed of codes and containers. The document kernel, which is a core program of the application, ensures the normal operation of the application; the editor is an editing component of the document, an editing status and a content of a document are saved in the editor; and the shell includes functional components such as a title bar, a menu bar and a bottom panel. Each WPS document contains the document kernel, the editor, and the shell.

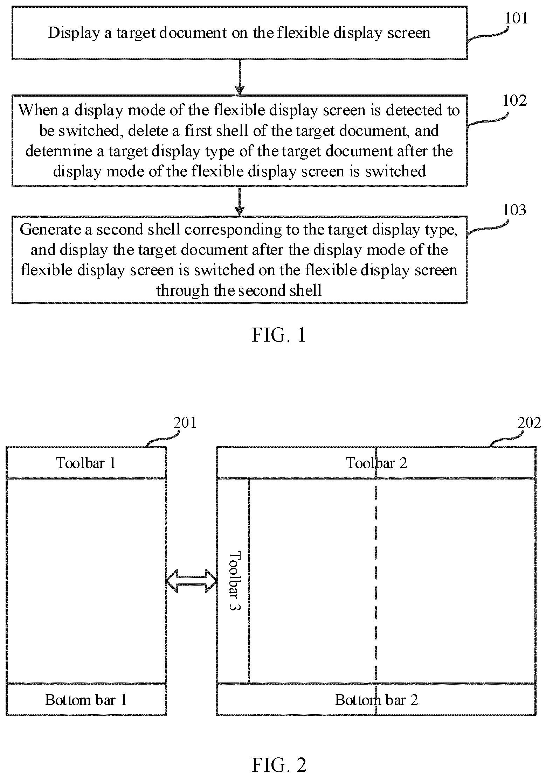

A method for displaying a document according to the embodiments of the present disclosure will be described in detail below in combination with the embodiments, as shown in FIG. 1, and steps are as follows.

At step 101, a target document is displayed on a flexible display screen.

In the embodiments of the present disclosure, an electronic device displays the target document on the flexible display screen. The flexible display screen is a display component of the electronic device. The flexible display screen can be folded, unfolded, or bent based on its characteristics; correspondingly, display modes of the flexible display screen includes two display modes such as unfolding mode and folding mode or three display modes such as unfolding mode, folding mode and bending mode, and the like. When the target document is displayed on the flexible display screen, the electronic device selects a version of the target document suitable for a display size of the flexible display screen, according to the display mode of the flexible display screen. If the display mode of the flexible display screen is the unfolding mode, the electronic device displays a tablet version of the target document on the flexible display screen; and if the display mode of the flexible display screen is the folding mode, the electronic device displays a mobile phone version of the target document on the flexible display screen. Display types of the document include a tablet display status and a mobile phone display status. The tablet version corresponds to the tablet display status of the electronic device and the mobile phone version corresponds to the mobile phone display status of the electronic device.

The target document can be any document displayed in the document processing application. Exemplarily, when the document processing application is a WPS application, the target document can be any WPS document displayed in the WPS application.

At step 102, when a display mode of the flexible display screen is detected to be switched, a first shell of the target document is deleted, and a target display type of the target document after the display mode of the flexible display screen is switched is determined.

In the embodiments of the present disclosure, the display mode of the flexible display screen is changed with a change of a form of the flexible display screen; when the flexible display screen is manually folded or unfolded by a user, the display mode of the flexible display screen is changed, and the electronic device detects the change in the display mode of the flexible display screen. When the display mode of the flexible display screen is detected to be switched, the electronic device deletes the first shell of the target document and determine the target display type of the target document after the display mode of the flexible display screen is switched. The shell includes functional components including a title bar, a menu bar, and a bottom panel in the target document and is composed of codes and containers.

Deleting the first shell of the target document includes: deleting a first code and a first container included in the first shell of the target document. In the embodiments of the present disclosure, when deleting the first shell of the target document, the electronic device deletes the first code and the first container to delete the first shell of the target document. The container is configured to divide the document kernel, the editor, and the shell of the WPS Android application into three independent parts, which protects the document kernel and the editor from being influenced by the deletion of the shell by the electronic device.

Due to the document kernel is the core program of the application, the document kernel ensures normal operations of the application. The editor includes editing components of the document, an editing status, and a content of the document is saved in the editor. Therefore, after the first shell is deleted, the editing status such as select, zoom and the like as well as document contents in the target document will not be lost, where the document contents include a content being processed and an unprocessed content before the display mode of the flexible display screen is switched. Determining the target display type of the target document after the display mode of the flexible display screen is switched can include step 1 and step 2:

At step 1, a target display mode of the flexible display screen is determined.

In the embodiments of the present disclosure, the electronic device can detect that the display mode of the flexible display screen is switched. When the display mode of the flexible display screen is switched, the electronic device can determine the display mode (i.e., the target display mode) of the flexible display screen after the display mode of the flexible display screen is switched according to an electrical signal triggered by switching the display mode of the flexible display screen.

At step 2, a target display type corresponding to the target display mode is determined according to a correspondence between the target display mode of the flexible display screen and the target display type of the target document.

A correspondence between respective display modes of the flexible display screen and respective display types of the document can be established in advance. In this way, when the document is displayed, the correspondence between the target display mode of the flexible display screen and the target display type of the target document can be obtained, such that the target display type corresponding to the target display mode is determined.

In the embodiments of the present disclosure, the electronic device can pre-store the correspondence between the display modes of the flexible display screen and the display types of the document, where the display modes of the flexible display screen can be changed through folding or unfolding the electronic device by a user, and the display types of the document include different versions of the document when displaying in different display modes of electronic devices. In the embodiments of the present disclosure, since the flexible display screen of the electronic device can be folded or unfolded to change the display type of the document of the electronic device, the display type of the document needs to be adapted to the different display modes of the electronic device in the embodiments of the present disclosure. After determining the switched display mode, the electronic device can determine the target display type corresponding to the target display mode according to the correspondence between the display modes of the flexible display screen and the target display types of the target document. Exemplarily, display types of the document can include a tablet display status and a mobile phone display status, the tablet display status corresponds to a document displayed on a tablet version interface, and the mobile phone display status corresponds to a document displayed on a mobile phone version interface.

At step 103, a second shell corresponding to the target display type is generated, and the target document after the display mode of the flexible display screen is switched is displayed on the flexible display screen through the second shell.

In the embodiments of the present disclosure, after the target display type corresponding to the target display mode is determined, the electronic device can generate the second shell corresponding to the target display type. After the second shell is generated, the electronic device can display the target document after the display mode of the flexible display screen is switched on the flexible display screen, where a shell in the target document after the display mode of the flexible display screen is switched is the second shell. In other words, the target document after the display mode of the flexible display screen is switched is displayed on the flexible display screen through the second shell.

FIG. 2 shows a schematic diagram of two display types of the target document corresponding to two display modes of the flexible display screen of the electronic device. An interface 201 is a display type of the target document, that is, the mobile phone display status. The interface 201 includes a toolbar 1 and a bottom bar 1. The toolbar 1 and the bottom bar 1 are functional components included in the shell of the target document in the mobile phone display status. An interface 202 is another display type of the target document, that is, the tablet display status. The interface 202 includes a toolbar 2, a toolbar 3 and a bottom bar 2. The toolbar 2, the toolbar 3 and the bottom bar 2 are functional components included in the shell of the target document in the tablet display status. When the flexible display screen of the electronic device is switched from the interface 201 to the interface 202, the electronic device can delete the toolbar 1 and the bottom bar 1 in the interface 201, that is, delete the functional components included in the shell of the target document in the mobile phone display status. The toolbar 2, the toolbar 3, and the bottom bar 2 are added to a new interface, that is, the functional components included in the shell of the target document in the tablet display status are added to form the interface 202. In other words, when the flexible display screen of the electronic device is switched from the folding mode to the unfolding mode, the electronic device can delete the toolbar 1 and the bottom bar 1 in the interface 201, and add the toolbar 2, the toolbar 3, and the bottom bar 2 to a new interface to form the interface 202.

There are a plurality of implementations for generating the second shell corresponding to the target display type.

In an implementation, generating the second shell corresponding to target display type can include step 1 and step 2.

At step 1, the second shell corresponding to the target display type is determined according to a preset correspondence between display modes and shells, where the second shell includes a second code and a second container.

In the embodiments of the present disclosure, the electronic device can determine the second shell corresponding to the target display type according to the preset correspondence between the display modes and the shells, where the second shell includes a second code and a second container. In this way, the electronic device can achieve an object of matching out an appropriate shell for the target document in different display modes. When the target display type is determined, the shell corresponding to the target display mode is determined as the second shell corresponding to the target display type, according to the preset correspondence between the display modes and the shells.

At step 2, the second code and the second container are input into a code sequence corresponding to the target document to generate the second shell corresponding to the target display type.

In the embodiments of the present disclosure, the electronic device can input the second code and the second container into the code sequence corresponding to the target document to generate the second shell corresponding to the target display type. In the embodiments of the present disclosure, the code sequence is a code sequence of the WPS Android application. During the operations of the WPS Android application, the electronic device can delete the code of the shell and the container of the shell, and input a code of a new shell and a container of the new shell to realize a hot-reconstruction process.

In another implementation, generating the second shell corresponding to the target display type can include:

determining the second shell corresponding to the target display type according to the preset correspondence between the display types and the shells, where the second shell includes a second code and a second container; and

inputting the second code and the second container into a code sequence corresponding to the target document to generate the second shell corresponding to the target display type.

The embodiments of the present disclosure provide a method for displaying a document, where a target document can be displayed on a flexible display screen of an electronic device. When a display mode of the flexible display screen is detected to be switched, the electronic device can delete a first shell of the target document, and determine the target display type of the target document after the display mode of the flexible display screen is switched. The electronic device can generate a second shell corresponding to the target display type and display the target document after the display mode of the flexible display screen is switched on the flexible display screen through the second shell. In this way, when the display mode of the electronic device is switched, the display type of the document can be switched without closing a currently opened document and/or in-editing document. It can be seen that with the present solution, when switching the display type of the document, user insensitive switching is realized, and the possibility of losing content being processed before the switching is reduced, so that the security of the document content is ensured.

Further, since there is no need to close the currently open document and/or in-editing document, the document is not required to be restarted, thereby improving the efficiency during switching display types and improving the smoothness of displaying the document, and improving the user experience.

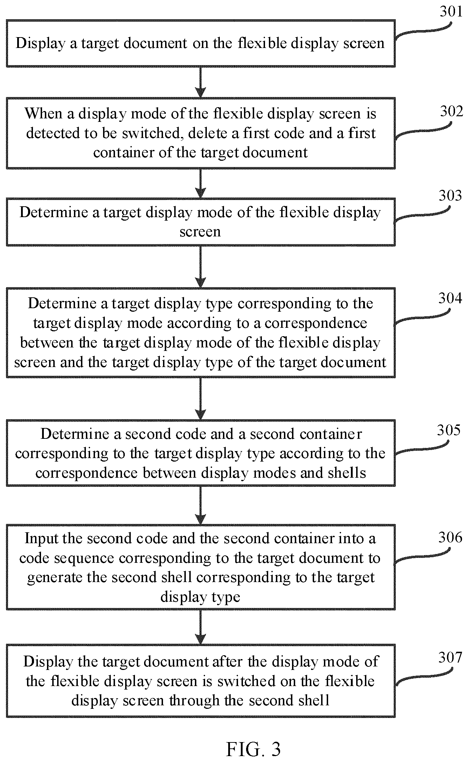

As shown in FIG. 3, an example of a method for displaying a document according to an embodiment of the present disclosure includes steps 301-307.

At step 301, a target document is displayed on the flexible display screen.

At step 302, when a display mode of the flexible display screen is detected to be switched, a first code and a first container are deleted.

At step 303, a target display mode of the flexible display screen is determined.

At step 304, a target display type corresponding to the target display mode is determined according to a correspondence between the target display mode of the flexible display screen and the target display type of the target document.

At step 305, a second code and a second container corresponding to the target display type are determined according to the correspondence between the display modes and the shells.

At step 306, the second code and the second container are input into a code sequence corresponding to the target document to generate the second shell corresponding to the target display type.

At step 307, the target document after the display mode of the flexible display screen is switched is displayed on the flexible display screen through the second shell.

The embodiments of the present disclosure provide a method for displaying a document, an electronic device can display a target document on the flexible display screen. When the display mode of the flexible display screen is detected to be switched, the electronic device can delete a first shell of the target document, and determine the target display type of the target document after the display mode of the flexible display screen is switched. The electronic device can generate a second shell corresponding to the target display type, and display the target document after the display mode of the flexible display screen is switched on the flexible display screen through the second shell. With the embodiments of the present disclosure, the electronic device switches merely the shell of the target document while retaining the editor and the document kernel of the target document. In this way, when the electronic device switches the display type, the display type of the document can be switched without closing the currently opened document and/or in-editing document. It can be seen that with the present solution, when switching the display type of the document, user insensitive switching is realized, and the possibility of losing content being processed before the switching is reduced, so that the security of the document content is ensured.

Further, since there is no need to close the currently open document and/or in-editing document, the document is not required to be restarted, thereby improving the efficiency during switching display types and improving the smoothness of displaying the document, and improving the user experience.

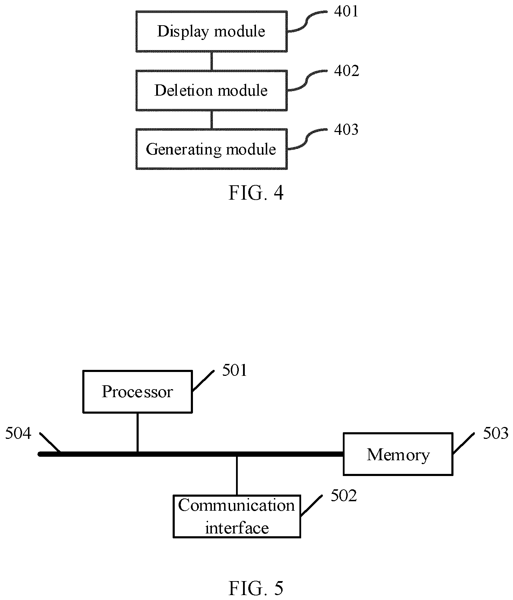

Based on the same technical concept, an embodiment of the present disclosure also provides an apparatus for displaying a document. As shown in FIG. 4, the apparatus includes:
a display module 401 configured to display a target document on the flexible display screen;
a deletion module 402 configured to, when a display mode of the flexible display screen is detected to be switched, delete a first shell of the target document, and determine a target display type of the target document after the display mode of the flexible display screen is switched; and
a generating module 403 configured to generate a second shell corresponding to the target display type, and display the target document after the display mode of the flexible display screen is switched on the flexible display screen through the second shell.

The generating module 403 is configured to:
determine the second shell corresponding to the target display type according to a preset correspondence between the display modes and the shells, where the second shell includes a second code and a second container; and
input the second code and the second container into a code sequence corresponding to the target document to generate the second shell corresponding to the target display type.

The deletion module 402 is configured to:
delete a first code and a first container included in the first shell of the target document.

The deletion module 402 is configured to:
determine a target display mode of the flexible display screen; and
determine the target display type corresponding to the target display mode according to a correspondence between the target display mode of the flexible display screen and the target display type of the target document.

The embodiments of the present disclosure provide an apparatus for displaying a document, where an electronic device can display a target document on a flexible display screen. When a display mode of the flexible display screen is detected to be switched, the electronic device can delete a first shell of the target document, and determine the target display type of the target document after the display mode of the flexible display screen is switched. The electronic device can generate a second shell corresponding to the target display type, and display the target document after the display mode of the flexible display screen is switched on the flexible display screen through the second shell. With the embodiments of the present disclosure, the electronic device switches merely the shell of the target document while retaining the editor and the document kernel of the target document. In this way, when the electronic device switches the display type, the display type of the document can be switched without closing the currently opened document and/or in-editing document. It can be seen that with the present solution, when switching the display type of the document, user insensitive switching is realized, and the possibility of losing content being processed before the switch is reduced, so that the security of the document content is ensured.

Further, since there is no need to close the currently open document and/or in-editing document, the document is not required to be restarted, thereby improving the efficiency during switching display types and improving the smoothness of displaying the document, and improving the user experience.

An embodiment of the present disclosure further provides an electronic device, as shown in FIG. 5, including a processor 501, a communication interface 501, a memory 503, and a communication bus 504, wherein the processor 501, the communication interface 502 and the memory 503 communicate with each other through the communication bus 504.

The memory 503 is configured to store computer programs.

The processor 501 is configured to implement the following steps when executing the programs stored on the memory 503:
displaying a target document on the flexible display screen;
when a display mode of the flexible display screen is detected to be switched, deleting a first shell of the target document, and determining a target display type of the target document after the display mode of the flexible display screen is switched; and
generating a second shell corresponding to the target display type; and displaying the target document after the display mode of the flexible display screen is switched on the flexible display screen through the second shell.

Exemplarily, the electronic device has a flexible display screen; exemplarily, the electronic device can be a terminal with a flexible display screen.

Generating a second shell corresponding to the target display type includes:
determining the second shell corresponding to the target display type according to a preset correspondence between display modes and shells, wherein the second shell includes a second code and a second container; and
inputting the second code and the second container into a code sequence corresponding to the target document to generate the second shell corresponding to the target display type.

Deleting the first shell of the target document includes:
deleting a first code and a first container included in the first shell of the target document.

Determining a target display type of the target document after the display mode of the flexible display screen is transformed includes:
determining a target display mode of the flexible display screen; and
determining the target display type corresponding to the target display mode according to a correspondence between the target display mode of the flexible display screen and the target display type of the target document.

The communication bus in the above network device can be a Peripheral Component Interconnect (PCI) bus or an Extended Industry Standard Architecture (EISA) bus. The communication bus can be divided into an address bus, a data bus, a control bus, and the like. For ease of representation, the communication bus is only shown as one thick line in the figure, but it does not mean that there is only one bus or one type of bus.

The communication interface is used for communication between the above network device and other devices.

The memory can include a Random Access Memory (RAM), and can a Non-Volatile Memory (NVM), such as at least one disk storage. Optionally, the memory can also be at least one storage device located away from the above-mentioned processor.

The above processor can be a general-purpose processor, including a Central Processing Unit (CPU), a Network Processor (NP), etc.; or can be a Digital Signal Processing (DSP) device, an Application Specific Integrated Circuit (ASIC), a field-programmable gate array (FPGA) or other programmable logic device, a discrete gate or a transistor logic device, a discrete hardware component.

Based on the same technical concept, the present disclosure further provides a computer-readable storage medium, having computer programs stored thereon that executable by a processor, cause the processor to implement the above-mentioned steps of the method for displaying a document.

Based on the same technical concept, the present disclosure further provides a computer program product containing instructions, when executed on a computer, cause the computer to implement the above-mentioned steps of the method for displaying a document.

Based on the same technical concept, the present disclosure further provides a computer program, when executed on a computer, causes the computer to execute the above-mentioned steps of the method for displaying a document.

In the above embodiments, all or part of the implementation can be realized by software, hardware, firmware, or any combination thereof. When implemented by software, all or part of the implementation can be realized in the form of a computer program product. The computer program product includes one or more computer instructions. When the computer program instructions are loaded and executed on a computer, the procedures or functions described in accordance with the embodiments of the present disclosure will take place in whole or in part. The computer can be a general purpose computer, a special purpose computer, a computer network, or other programmable device. The computer instructions can be stored in a computer readable storage medium or transmitted from one computer readable storage medium to another computer readable storage medium, for example, the computer instructions can be transmitted from one website, computer, server, or data center to another website, computer, server, or data center via wired (e.g., coaxial cable, fiber optic, Digital Subscriber Line (DSL)) or wireless (e.g., infrared, wireless, microwave, etc.) means. The computer-readable storage medium can be any available medium that can be accessed by a computer or a data storage device, such as an integrated server, an integrated data center, etc., that includes one or more usable media. The usable media can be a magnetic media (e.g., floppy Disk, hard Disk, magnetic tape), an optical media (e.g., DVD), or a semiconductor media (e.g., Solid State Disk (SSD)), among others.

It should be noted that the relationship terms use here, such as "first," "second," and the like are only used to distinguish one entity or operation from another entity or operation, but do not necessarily require or imply that there is actual relationship or order between these entities or operations. Moreover, the terms "include," "comprise," or any variants thereof are intended to cover a non-exclusive inclusion, such that processes, methods, articles, or devices, including a series of elements, include not only those elements that have been listed, but also other elements that have not specifically been listed or the elements intrinsic to these processes, methods, articles, or devices. Without further limitations, elements limited by the wording "comprise(s) a/an..." and "include(s) a/an..." do not exclude additional identical elements in the processes, methods, articles, or devices, including the listed elements.

## Claims

1. A method for displaying a document, being applied to a terminal with a flexible display screen, comprising:
displaying (101) a target document within a document processing application on the flexible display screen, the document processing application comprising a document kernel, an editor and a shell, each of these comprising respective codes and containers, wherein the document kernel is a core program of the document processing application for ensuring normal operation of the document processing application, the editor is an editing component of the document processing application, an editing status and a content of a document are saved in the editor, and the shell comprises functional components comprising a title bar, a menu bar and a bottom panel;
when a display mode of the flexible display screen is detected to be switched from a mode that the flexible display is in a folded state (201) to a mode that the flexible display in an unfolded state (202), deleting (102) the shell related to the target document shown in the document processing application in the first mode, and determining a target display type of the target document after the display mode of the flexible display screen is switched;
generating (103) a second shell corresponding to the target display type; and displaying the target document within the document processing application after the display mode of the flexible display screen is switched on the flexible display screen through the second shell.

2. The method according to claim 1, wherein generating the second shell corresponding to the target display type, comprises:
determining (305) the second shell corresponding to the target display type according to a preset correspondence between display modes and shells, wherein the second shell comprises a second code and a second container; and
inputting (306) the second code and the second container into a code sequence corresponding to the target document to generate the second shell corresponding to the target display type.

3. The method according to claim 1 or 2, wherein deleting the shell related to the target document shown in the document processing application in the first mode, comprises:
deleting (302) a first code and a first container comprised in the shell related to the target document shown in the document processing application in the first mode.

4. The method according to claim 1 or 2, wherein determining the target display type of the target document after the display mode of the flexible display screen is switched, comprises:
determining (303) a target display mode of the flexible display screen; and
determining (304) the target display type corresponding to the target display mode according to a correspondence between the target display mode of the flexible display screen and the target display type of the target document.

5. An apparatus for displaying a document, being applied to a terminal with a flexible display screen, comprising:
a display module, configured to display a target document within a document processing application on the flexible display screen, the document processing application comprising a document kernel, an editor and a shell, each of these comprising respective codes and containers, wherein the document kernel is a core program of the document processing application for ensuring normal operation of the document processing application, the editor is an editing component of the document processing application, an editing status and a content of a document are saved in the editor, and the shell comprises functional components comprising a title bar, a menu bar and a bottom panel;
a deletion module, configured to, when a display mode of the flexible display screen is detected to be switched from a mode that the flexible display is in a folded state (201) to a mode that the flexible display in an unfolded state (202), delete the shell related to the target document shown in the document processing application in the first mode, and determine a target display type of the target document after the display mode of the flexible display screen is switched; and
a generating module, configured to generate a second shell corresponding to the target display type, and display the target document within the document processing application after the display mode of the flexible display screen is switched on the flexible display screen through the second shell.

6. The apparatus according to claim 5, wherein the generating module is configured to:
determine the second shell corresponding to the target display type according to a preset correspondence between display modes and shells, wherein the second shell comprises a second code and a second container; and
input the second code and the second container into a code sequence corresponding to the target document to generate the second shell corresponding to the target display type.

7. The apparatus according to claim 5 or 6, wherein the deletion module is configured to:
delete a first code and a first container comprised in the shell related to the target document shown in the document processing application in the first mode.

8. The apparatus according to claim 5 or 6, wherein the deletion module is configured to:
determine a target display mode of the flexible display screen;
determine the target display type corresponding to the target display mode according to a correspondence between the target display mode of the flexible display screen and the target display type of the target document.

9. A computer-readable storage medium, having computer programs stored thereon which are executable by a processor and which, when executed by said processor, cause the processor to implement the method according to any one of claims 1-4.

10. A computer program product containing instructions which, when executed on a computer, causes the computer to implement the method according to any one of claims 1-4.

## Patentansprüche

1. Verfahren zum Anzeigen eines Dokuments, das auf ein Endgerät mit einem flexiblen Anzeigebildschirm angewendet wird, umfassend:
Anzeigen (101) eines Zieldokuments innerhalb einer Dokumentenverarbeitungsanwendung auf dem flexiblen Anzeigebildschirm, wobei die Dokumentenverarbeitungsanwendung einen Dokumentenkern, einen Editor und eine Shell umfasst, die jeweils entsprechende Codes und Behälter umfassen, wobei der Dokumentenkern ein Kernprogramm der Dokumentenverarbeitungsanwendung ist, um den normalen Betrieb der Dokumentenverarbeitungsanwendung sicherzustellen, der Editor eine Bearbeitungskomponente der Dokumentenverarbeitungsanwendung ist, ein Bearbeitungsstatus und ein Inhalt eines Dokuments in dem Editor gespeichert werden und die Shell Funktionskomponenten umfasst, die eine Titelleiste, eine Menüleiste und ein unteres Bedienfeld umfassen;
wenn detektiert wird, dass ein Anzeigemodus des flexiblen Anzeigebildschirms von einem Modus, in dem sich der flexible Anzeigebildschirm in einem gefalteten Zustand (201) befindet, in einen Modus umgeschaltet wird, in dem sich der flexible Anzeigebildschirm in einem ungefalteten Zustand (202) befindet, Löschen (102) der Shell, die mit dem Zieldokument in Verbindung steht, das in der Anwendung zur Dokumentenverarbeitung in dem ersten Modus angezeigt wird, und Bestimmen eines Zielanzeigetyps des Zieldokuments, nachdem der Anzeigemodus des flexiblen Anzeigebildschirms umgeschaltet wurde;
Erzeugen (103) einer zweiten Shell entsprechend dem Zielanzeigetyp; und Anzeigen des Zieldokuments innerhalb der Dokumentenverarbeitungsanwendung, nachdem der Anzeigemodus des flexiblen Anzeigebildschirms über die zweite Shell auf dem flexiblen Anzeigebildschirm umgeschaltet wurde.

2. Verfahren nach Anspruch 1, wobei das Erzeugen der zweiten Shell entsprechend dem Zielanzeigetyp Folgendes umfasst:
Bestimmen (305) der zweiten Shell entsprechend dem Zielanzeigetyp gemäß einer voreingestellten Entsprechung zwischen Anzeigemodi und Shells, wobei die zweite Shell einen zweiten Code und einen zweiten Behälter umfasst; und
Eingeben (306) des zweiten Codes und des zweiten Behälters in eine Codesequenz, die dem Zieldokument entspricht, um die zweite Shell entsprechend dem Zielanzeigetyp zu erzeugen.

3. Verfahren nach Anspruch 1 oder 2, wobei das Löschen der Shell, die mit dem Zieldokument in Verbindung steht, das in der Dokumentverarbeitungsanwendung in dem ersten Modus angezeigt wird, Folgendes umfasst:
Löschen (302) eines ersten Codes und eines ersten Behälters, die in der Schell umfasst sind, die mit dem Zieldokument in Verbindung steht, das in der Dokumentverarbeitungsanwendung in dem ersten Modus gezeigt wird.

4. Verfahren nach Anspruch 1 oder 2, wobei das Bestimmen des Zielanzeigetyps des Zieldokuments, nachdem der Anzeigemodus des flexiblen Anzeigebildschirms umgeschaltet wurde, Folgendes umfasst:
Bestimmen (303) eines Zielanzeigemodus des flexiblen Anzeigebildschirms; und
Bestimmen (304) des Zielanzeigetyps entsprechend dem Zielanzeigemodus gemäß einer Entsprechung zwischen dem Zielanzeigemodus des flexiblen Anzeigebildschirms und dem Zielanzeigetyp des Zieldokuments.

5. Vorrichtung zum Anzeigen eines Dokuments, das auf ein Endgerät mit einem flexiblen Anzeigebildschirm angewendet wird, umfassend:
Anzeigemodul, das dazu konfiguriert ist, ein Zieldokument innerhalb einer Dokumentenverarbeitungsanwendung auf dem flexiblen Anzeigebildschirm anzuzeigen, wobei die Dokumentenverarbeitungsanwendung einen Dokumentenkern, einen Editor und eine Shell umfasst, die jeweils entsprechende Codes und Behälter umfassen, wobei der Dokumentenkern ein Kernprogramm der Dokumentenverarbeitungsanwendung ist, um den normalen Betrieb der Dokumentenverarbeitungsanwendung sicherzustellen, der Editor eine Bearbeitungskomponente der Dokumentenverarbeitungsanwendung ist, ein Bearbeitungsstatus und ein Inhalt eines Dokuments in dem Editor gespeichert werden und die Shell Funktionskomponenten umfasst, die eine Titelleiste, eine Menüleiste und ein unteres Bedienfeld umfassen;
ein Löschmodul, das dazu konfiguriert ist, wenn detektiert wird, dass ein Anzeigemodus des flexiblen Anzeigebildschirms von einem Modus, in dem sich der flexible Anzeigebildschirm in einem gefalteten Zustand (201) befindet, in einen Modus umgeschaltet wird, in dem sich der flexible Anzeigebildschirm in einem ungefalteten Zustand (202) befindet, die Shell, die mit dem Zieldokument in Verbindung steht, das in der Anwendung zur Dokumentenverarbeitung in dem ersten Modus angezeigt wird, zu löschen und einen Zielanzeigetyp des Zieldokuments, nachdem der Anzeigemodus des flexiblen Anzeigebildschirms umgeschaltet wurde zu bestimmen; und
ein Erzeugungsmodul, das dazu konfiguriert ist, eine zweite Shell entsprechend dem Zielanzeigetyp zu erzeugen und das Zieldokument innerhalb der Dokumentenverarbeitungsanwendung, nachdem der Anzeigemodus des flexiblen Anzeigebildschirms über die zweite Shell auf dem flexiblen Anzeigebildschirm umgeschaltet wurde, anzuzeigen.

6. Vorrichtung nach Anspruch 5, wobei das Erzeugungsmodul zu Folgendem konfiguriert ist:
Bestimmen der zweiten Shell entsprechend dem Zielanzeigetyp gemäß einer voreingestellten Entsprechung zwischen Anzeigemodi und Shells, wobei die zweite Shell einen zweiten Code und einen zweiten Behälter umfasst; und
Eingeben des zweiten Codes und des zweiten Behälters in eine Codesequenz, die dem Zieldokument entspricht, um die zweite Shell entsprechend dem Zielanzeigetyp zu erzeugen.

7. Vorrichtung nach Anspruch 5 oder 6, wobei das Erzeugungsmodul zu Folgendem konfiguriert ist:
Löschen eines ersten Codes und eines ersten Behälters, die in der Shell umfasst sind, die mit dem Zieldokument in Verbindung steht, das in der Dokumentverarbeitungsanwendung in dem ersten Modus gezeigt wird.

8. Vorrichtung nach Anspruch 5 oder 6, wobei das Erzeugungsmodul zu Folgendem konfiguriert ist:
Bestimmen eines Zielanzeigemodus des flexiblen Anzeigebildschirms;
Bestimmen des Zielanzeigetyps entsprechend dem Zielanzeigemodus gemäß einer Entsprechung zwischen dem Zielanzeigemodus des flexiblen Anzeigebildschirms und dem Zielanzeigetyp des Zieldokuments.

9. Computerlesbares Speichermedium, das darauf gespeicherte Computerprogramme aufweist, die durch einen Prozessor ausführbar sind und die, wenn sie durch den Prozessor ausgeführt werden, den Prozessor veranlassen, das Verfahren nach einem der Ansprüche 1-4 zu implementieren.

10. Computerprogrammprodukt, das Anweisungen enthält, die, wenn sie auf einem Computer ausgeführt werden, den Computer dazu veranlassen, das Verfahren nach einem der Ansprüche 1-4 zu implementieren.

## Revendications

1. Procédé d'affichage d'un document, étant appliqué à un terminal avec un écran d'affichage flexible, comprenant :
l'affichage (101) d'un document cible dans une application de traitement de documents sur l'écran d'affichage flexible, l'application de traitement de documents comprenant un noyau de document, un éditeur et un shell, chacun de ceux-ci comprenant des codes et des conteneurs respectifs, dans lequel le noyau de document est un programme de base de l'application de traitement de documents pour assurer le fonctionnement normal de l'application de traitement de documents, l'éditeur est un composant d'édition de l'application de traitement de documents, un état d'édition et un contenu d'un document sont enregistrés dans l'éditeur, et le shell comprend des composants fonctionnels comprenant une barre de titre, une barre de menu et un panneau inférieur ;
lorsqu'un mode d'affichage de l'écran d'affichage flexible est détecté comme étant commuté d'un mode dans lequel l'affichage flexible est dans un état plié (201) à un mode dans lequel l'affichage flexible est dans un état déplié (202), la suppression (102) du shell lié au document cible affiché dans l'application de traitement de documents dans le premier mode, et la détermination d'un type d'affichage cible du document cible après que le mode d'affichage de l'écran d'affichage flexible est commuté ;
la génération (103) d'un second shell correspondant au type d'affichage cible ; et l'affichage du document cible dans l'application de traitement de documents après que le mode d'affichage de l'écran d'affichage flexible est commuté sur l'écran d'affichage flexible à travers le second shell.

2. Procédé selon la revendication 1, dans lequel la génération du second shell correspondant au type d'affichage cible comprend :
la détermination (305) du second shell correspondant au type d'affichage cible selon une correspondance prédéfinie entre des modes d'affichage et des shells, dans lequel le second shell comprend un second code et un second conteneur ; et
l'entrée (306) du second code et du second conteneur dans une séquence de codes correspondant au document cible pour générer le second shell correspondant au type d'affichage cible.

3. Procédé selon la revendication 1 ou 2, dans lequel la suppression du shell associé au document cible affiché dans l'application de traitement de documents dans le premier mode comprend :
la suppression (302) d'un premier code et d'un premier conteneur compris dans le shell lié au document cible affiché dans l'application de traitement de documents dans le premier mode.

4. Procédé selon la revendication 1 ou 2, dans lequel la détermination du type d'affichage cible du document cible après que le mode d'affichage de l'écran d'affichage flexible est commuté comprend :
la détermination (303) d'un mode d'affichage cible de l'écran d'affichage flexible ; et
la détermination (304) du type d'affichage cible correspondant au mode d'affichage cible selon une correspondance entre le mode d'affichage cible de l'écran d'affichage flexible et le type d'affichage cible du document cible.

5. Appareil d'affichage d'un document, étant appliqué à un terminal avec un écran d'affichage flexible, comprenant :
un module d'affichage, configuré pour afficher un document cible dans une application de traitement de documents sur l'écran d'affichage flexible, l'application de traitement de documents comprenant un noyau de document, un éditeur et un shell, chacun de ceux-ci comprenant des codes et des conteneurs respectifs, dans lequel le noyau de document est un programme de base de l'application de traitement de documents pour assurer le fonctionnement normal de l'application de traitement de documents, l'éditeur est un composant d'édition de l'application de traitement de documents, un état d'édition et un contenu d'un document sont enregistrés dans l'éditeur, et le shell comprend des composants fonctionnels comprenant une barre de titre, une barre de menu et un panneau inférieur ;
un module de suppression, configuré pour, lorsqu'un mode d'affichage de l'écran d'affichage flexible est détecté comme étant commuté d'un mode dans lequel l'affichage flexible est dans un état plié (201) à un mode dans lequel l'affichage flexible est dans un état déplié (202), supprimer le shell lié au document cible affiché dans l'application de traitement de documents dans le premier mode, et déterminer un type d'affichage cible du document cible après que le mode d'affichage de l'écran d'affichage flexible est commuté ; et
un module de génération, configuré pour générer un second shell correspondant au type d'affichage cible, et afficher le document cible dans l'application de traitement de documents après que le mode d'affichage de l'écran d'affichage flexible est commuté sur l'écran d'affichage flexible à travers le second shell.

6. Appareil selon la revendication 5, dans lequel le module de génération est configuré pour :
déterminer le second shell correspondant au type d'affichage cible selon une correspondance prédéfinie entre des modes d'affichage et des shells, dans lequel le second shell comprend un second code et un second conteneur ; et
entrer le second code et le second conteneur dans une séquence de codes correspondant au document cible pour générer le second shell correspondant au type d'affichage cible.

7. Appareil selon la revendication 5 ou 6, dans lequel le module de suppression est configuré pour :
supprimer un premier code et un premier conteneur compris dans le shell lié au document cible affiché dans l'application de traitement de documents dans le premier mode.

8. Appareil selon la revendication 5 ou 6, dans lequel le module de suppression est configuré pour :
déterminer un mode d'affichage cible de l'écran d'affichage flexible ;
déterminer le type d'affichage cible correspondant au mode d'affichage cible selon une correspondance entre le mode d'affichage cible de l'écran d'affichage flexible et le type d'affichage cible du document cible.

9. Support de stockage lisible par ordinateur, sur lequel sont stockés des programmes informatiques qui sont exécutables par un processeur et qui, lorsqu'ils sont exécutés par ledit processeur, amènent le processeur à mettre en œuvre le procédé selon l'une quelconque des revendications 1 à 4.

10. Produit de programme informatique contenant des instructions qui, lorsqu'elles sont exécutées par un ordinateur, amènent l'ordinateur à mettre en œuvre le procédé selon l'une quelconque des revendications 1 à 4.
